(19) Europäisches Patentamt / European Patent Office / Office européen des brevets

(11) **EP 2 975 296 B1**

(12) **EUROPEAN PATENT SPECIFICATION**

(45) Date of publication and mention
of the grant of the patent:
**11.11.2020  Bulletin 2020/46**

(51) Int Cl.:
**F16H 1/32** *(2006.01)*

(21) Application number: **15176994.0**

(22) Date of filing: **16.07.2015**

(54) **PLANETARY GEARBOX**

PLANETENGETRIEBE

TRANSMISSION À PLANETAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.07.2014  IT GE20140068**

(43) Date of publication of application:
**20.01.2016  Bulletin 2016/03**

(73) Proprietor: **STAM Srl
16121 Genova (IT)**

(72) Inventors:
  • **Barbagelata, Andrea
    16121 Genova (IT)**

  • **Ellero, Stefano
    16121 Genova (IT)**
  • **Landò, Roberto
    16121 Genova (IT)**

(74) Representative: **Karaghiosoff, Giorgio
Alessandro**
**c/o Praxi Intellectual Property S.p.A. - Savona**
**Via F. Baracca 1R, 4° piano**
**"Il Gabbiano"**
**17100 Savona (IT)**

(56) References cited:
**DE-A1- 2 162 867      FR-A- 911 756
GB-A- 216 149      US-A- 3 159 056**

**Description**

The invention relates to a gearbox based on tilted bevel gears, particularly for high gear ratios, comprising an input shaft and an output shaft connected with each other by a gear train to reduce the transmission ratio.

Several types of gearboxes are used; however they do not allow the problem of the high gear ratio together with the problem of minimum space requirements of the gearbox and the problem of the high performance to be contemporaneously solved.

Currently the last types of gearboxes able to generate a great reduction with a limited number of stages refer to four main technologies.

Cyclo: it is based on two cycloidal disks and two eccentric bearings connected to the input shaft with an offset of 180°. Such concept has been further developed by Japanese companies for medium gear ratios. However the system is quite complicated and therefore the implementation is more expensive than conventional gearboxes.

Harmonic drive: the commercial use of Harmonic Drives has increased during the 70' and 80', as soon as they became popular for machine tools, printing presses, phototypesetting, and medical diagnostics machines. Today applications have extended to industrial automation machines, to semiconductor manufacturing apparatuses and to robotics. Harmonic drive gearboxes are composed of three main parts: the circular spline, the flexpline and wave generator. The flexspline is a non-rigid component and this limits the use of the Harmonic Drive to applications with low power, gear ratios lower than 300 and limited transmittable torque;

Epicyclic gearbox: it comprises several parts (at least six parts) and it uses wheels that have to be made of high-resistance materials. The inner wheels are hollow and they need particular mechanical treatments for the surface finishing. When high gear ratios are required, several reduction stages are necessary, with disadvantages for the efficiency and the overall dimensions.

US 3 159 056 A discloses a planetary gearbox of the related art. The aim of the invention is to improve the known systems such to minimize space requirements and to maximize the performance.

The invention is defined by the features of claim 1.

The invention achieves the above aims by an innovative epicyclic gearbox called as Nugear and based on tilted bevel gears. The gearbox according to the invention bases its operation on the nutation motion.

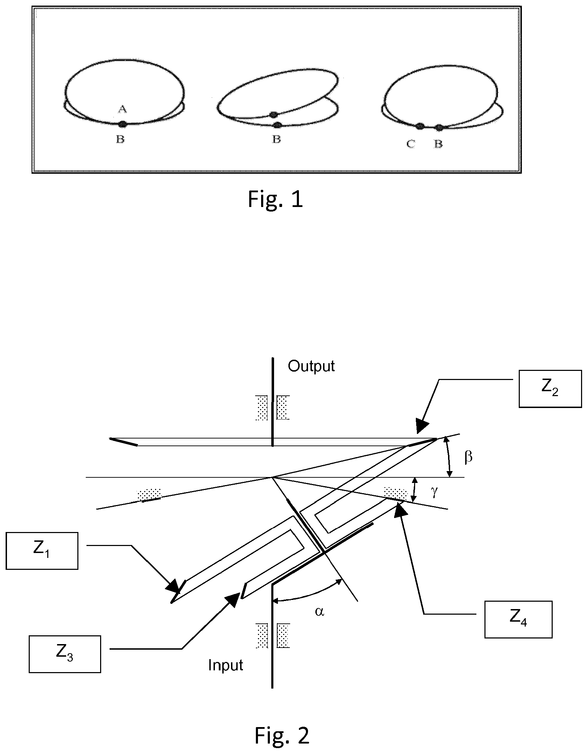

See Fig.1 in order to idealize the motion: let us imagine that a first circumference is obliged to keep a single point of contact on a circumference with a slightly different diameter, and it begins a rotation motion without slipping thereon. The point A, integral with the first circumference initially coinciding with the point B, will move, and after a rotation thereof, it will be at C. The movement is of such an amount equal to the difference in the length of the two circumferences. This type of motion is carried out, in the gearbox according to the present invention (Nugear), by two pairs of bevel gears obtained by a kinematic synthesis.

According to one embodiment, the Nugear system that is the gearbox according to the present invention is composed of four tilted bevel gears allowing very high gear ratios to be obtained within restricted spaces.

The limit of the application is the limited performance of the system when the gear ratios are particularly high. Usually two configurations of the system are possible:

Single Face configuration
Double Face configuration.

According to one embodiment of the present invention, such configurations are arranged in series to form a double-stage gearbox.

However as it is easy to understand it is possible also to provide to couple the double face stage with other types of first stage gearboxes.

Further characteristics of the invention are the subject matter of the dependent claims.

The characteristics and the advantages deriving therefrom will be more clear from the following description of one non-limitative embodiment shown in the annexed figures, wherein:

Figure 1 is the principle of the nutation motion.
Figure 2 is the logic diagram of the Single Face configuration.
Figure 3 is the logic diagram of the Double Face configuration.
Figure 4 is a section according to diametral plane coinciding with the common axis of the output and input shafts of a first embodiment of the gearbox according to the present invention.
Figure 5 is a diagram comparing the performances of the first and second reduction stages.
Figure 6 is a longitudinal section of one embodiment of the gearbox according to the invention wherein the first and second stages are inverted with each other.
Figure 7 is an axonometric view of one embodiment of the gearbox according to the invention shown in figure 4.

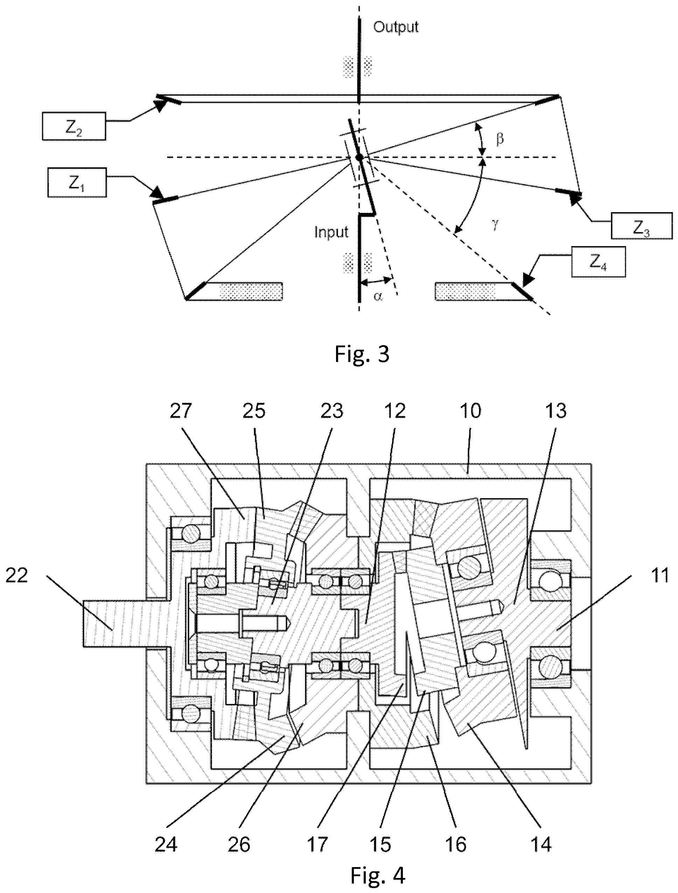

With reference to Figure 2, it shows the logic diagram of the Single Face configuration, that in the preferred embodiment is the first reduction stage of the invention, while Figure 3 shows the Double Face configuration, that is the second reduction stage.

A preferred embodiment of the invention consists in coupling in series the two previous Nugear concepts ("Single Face" and "Double Face"), allowing a better performance of the system and very high gear ratios.

The integration between the two different stages with the Single Face-Double Face sequence has several innovation aspects that lead to a considerable optimization of spaces.

It is also possible to provide to invert the single-face and double-face configurations according to the definition from the detailed description below, according to which the double-face configuration is the first stage and the single-face one is the second stage.

As regards the preferred configuration shown and described below it has to be noted particularly that the Single Face configuration has an intrinsic arrangement that minimizes axial space requirements but not radial space requirements; this is due to the fact that the sun gears are housed one inside the other one. It is clear that, since all the wheels are subjected to about the same load, the external wheels are oversized, since they have to house therein the sun wheel and the output wheel with which it is coupled. From such arrangement it is understood that the fact of placing the kinematic mechanism with single face configuration at the first stage, namely in a point of the kinematic chain where the torque is relatively low, allows its characteristics to be exploited at best.

Likewise the Double Face configuration has a radial development lower than the axial development since it has all the four wheels composing it geometrically placed in series, therefore without the need of over-sizing any pairs of bevel gears. Likewise what mentioned above, the fact of placing the Double Face configuration at the second stage, in an area where the torque is relatively higher, optimizes its arrangement.

A last consideration about Single Face-Double Face integration is about the fact that the wheels fixed to the frame are in the same position, at the center of the kinematic mechanism, allowing the case of the mechanism to be made as a single piece and the wheels to be integrated, therefore minimizing space requirements and guaranteeing an optimal accuracy of the components.

In one embodiment the gearbox as a whole according to the invention comprises a case, a first and second shafts coaxial with each other and supported so as to rotate with respect to the mentioned case; the first of the shafts having inside the case an end portion inclined with respect to its axis and supporting a first and a second bevel gears respectively, integral with each other, that rotate in an idle manner on the inclined portion of the first mentioned shaft; inside said case and coaxial with the second shaft a third and a fourth bevel gears respectively are mounted independent and concentric with each other, which engage the previous ones; one of the two gears just mentioned being made integral with the case and the other one with the second shaft mentioned above.

The output shaft from the first stage is the input one for the second Double Face stage. The second stage comprises the input shaft and the output shaft, coaxial with the previous one; such shafts are supported and can rotate with respect to the case. The input shaft for the second stage has, inside the case, an end portion inclined by a predetermined angle with respect to the shaft axis, and on which two bevel gears rotate, in an idle manner and integral with each other or made as integral with each other, which are at the opposite sides of the disc-like structure connected to said body. The conical generatrices of the teeth of the two gears have the vertex in common. Inside the case and integral thereto a third fixed gear, or ring gear, is mounted having the teeth converging to the center of its pitch circle such that it is coaxial with the output shaft. Likewise a fourth bevel gear is provided, concentric with the previous one, which is made as integral with the output shaft of the gearbox.

By means of such arrangement, the gearbox according to the invention is able to generate high gear ratios, while keeping an excellent performance. The gearbox according to the invention can be applied in all those cases where great reductions of revolutions and a high accuracy and reliability are necessary, such as for example in the remote automatic handling of gate valves, robotic arms and pliers, for interlocking on typographic machines and the like.

With reference to figure 4 a gearbox according to the invention comprises a case 10 from which a first shaft 11 and a second shaft 22 coaxial with the previous one come out; such shafts are supported and can rotate with respect to the case. The first shaft 11 mentioned above is the input shaft of the gearbox and therefore of its first stage, with a Single Face configuration. It has, inside the case 10, an end portion 13 inclined by a predetermined angle with respect to the axis of the shaft, and a first internal bevel gear 15 and a second bevel gear 14 as a bevel ring gear concentric and external to the first internal bevel gear 15 rotate thereon, in an idle manner and integral with each other or made as integral with each other. If there are no constructional difficulties the two bevel gears 14 and 15 can be obtained on a single gear wheel, making the latter as a die-cast part for example made of synthetic resins; otherwise it is necessary to guarantee the impossibility of relative rotations between the bevel gears 14 and 15. Inside the case 10 and integral thereto a third fixed gear is mounted, or ring gear 16, with teeth converging to the center of its pitch circle such that it is coaxial with the shaft 12. Likewise there is provided a fourth bevel gear 17, concentric and internal to the previous bevel gear 16, which is made as integral with the shaft 12. The conical generatrices of the teeth of the four gears 14, 15, 16 and 17 have the vertex in common; such vertex coincides with the point of intersection between the axis of the shafts 11 and 12 and the axis of the end inclined portion 13.

Still with reference to figure 4 the shaft 12 is the input shaft for the second stage, with Double Face configuration. The second stage comprises the input shaft 12 and the output shaft 22, coaxial to the previous ones; the output shaft 22 besides being the output shaft for the second double face stage is also the output shaft for the whole gearbox. Such shafts are supported and can rotate with respect to the case 10. The first shaft 12 mentioned above, inside the case 10, has an end portion 23 inclined by a predetermined angle with respect to the axis of the shaft, and the bevel gears 24 and 25 rotate thereon, in an idle manner and integral with each other or made as integral with each other thereon, which are at the opposite sides of the disc-like structure that rotate in an idle manner on the body 23. Inside the case 10 and integral thereto a seventh fixed gear is mounted, or ring gear 26, with teeth converging to the center of its pitch circle such that it is coaxial with the shaft 22. Likewise there is provided an eighth bevel gear 27, coaxial with the previous one, which is made as integral with the output shaft 22 of the gearbox. The conical generatrices of the teeth of the four gears 24, 25, 26 and 27 have the vertex in common; such vertex coincides with the point of intersection between the axis of the shafts 12 and 22 and the axis of the end inclined portion 23.

With reference to the two single-stage elements of the gearbox, shown in Figure 2 and in Figure 3 for the "Single Face" and "Double face" configuration respectively, we denote:

by Z1 the number of teeth for the gear or ring gear 15 (or 25 for the second stage),
by Z2 the number of teeth of the respective bevel gear 17 (or 27),
by Z3 the number of teeth of the bevel gear 14 (or 24) and,
by Z4 the number of teeth of the bevel gear 16 (or 26) ;
by $\delta1$ the semi-conical angle of the gear or ring gear 15 (or 25 for the second stage)
by $\delta2$ the semi-conical angle of the respective bevel gear 17 (or 27)
by $\delta3$ the semi-conical angle of the bevel gear 14 (or 24)
by $\delta4$ the semi-conical angle of the bevel gear 16 (or 26) ;
by $\alpha$ the angle formed by the axes of the input shaft 11 (or 12 for the second stage) and the inclined portion 13 (or 23) thereof;
by $\beta$ the angle between the horizontal and the instantaneous axis of rotation of the gear connecting the wheel 15 (or 25) and the wheel 17 (or 27) and
by $\gamma$ the angle between the horizontal and the instantaneous axis of rotation of the gear connecting the wheel 16 (or 26) and the wheel 14 (or 24) .

The semi-conical angles $\delta1$, $\delta2$, $\delta3$, $\delta4$ and the characteristic angles $\alpha$, $\beta$, $\gamma$ are related with each other by the following relations:

$$\delta1 = \frac{\pi}{2} - \alpha + \beta$$

$$\delta2 = \frac{\pi}{2} - \beta$$

$$\delta3 = \frac{\pi}{2} - \alpha + \gamma$$

$$\delta4 = \frac{\pi}{2} - \gamma$$

The gear ratio $\tau$ (inverse of the transmission ratio i) that can be obtained by each individual stage of the gearbox therefore can be expressed as it follows:

$$\tau = \frac{1}{i} = 1 - \frac{Z4 \cdot Z1}{Z3 \cdot Z2} = 1 - \frac{\sin \delta4 \cdot \sin \delta1}{\sin \delta3 \cdot \sin \delta2}$$

The evaluation of the performance of the gearbox can be carried out by considering only the losses in the gears and by ignoring those of lower importance, for example the losses in the bearings. By applying the relations that are obtained by the analysis of the power flows in a bevel gear pair, it is possible to obtain an expression of the performance as a function of the characteristic angles or of the transmission ratio and of the elementary performance of bevel gear pairs $\eta_{e1}$:

$$\eta = \frac{\eta_{el}^2}{i \cdot (1 - \eta_{el}^2) + 2 \cdot \eta_{el}^2 - 1}$$

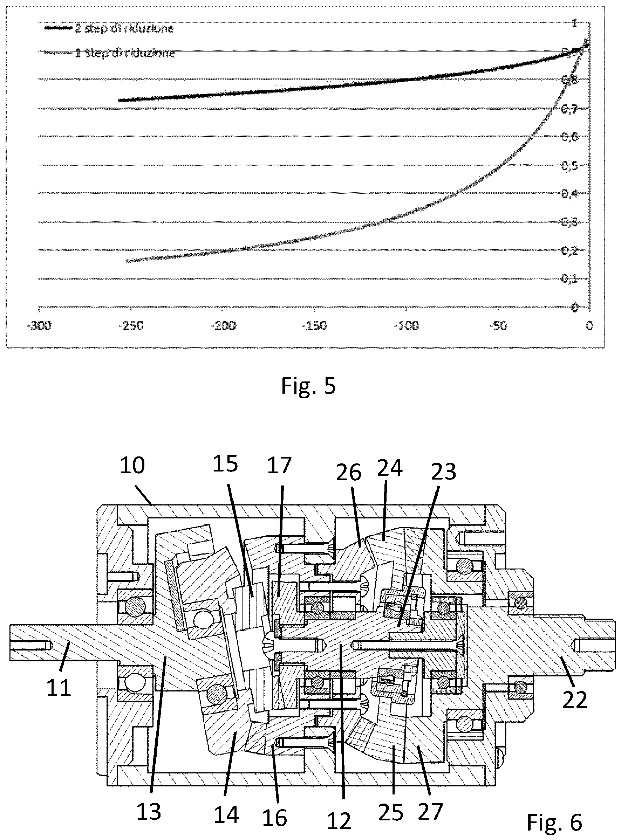

If we take a standard value for qel it is possible to obtain the gray curve (1 reduction step) of the plot of figure 5, that shows the performance of the gearbox as the transmission ratio changes. Supposing to obtain the same transmission ratio with two reduction stages in series instead of one reduction stage, considerable savings as regards the performance are obtained (see the black curve "2 reduction step" of figure 5).

Now assuming a gear ratio $\tau$ of 1/225 to be desired. Such ratio may be obtained by using a gearbox with one stage with the following number of teeth: Zl=16, Z2=15, Z3=15, Z4=14. In such configuration the performance according to figure 5 would be equal to about 0.20.

On the contrary by using the invention, where the gearbox comprises two stages, the gear ratio could be obtained by having in each reduction stage a gear ratio equal to 15, that may be obtained with the following number of teeth: Z1=Z2=Z3=15, Z4=14. As it is possible to see approximately from figure 5 the performance of the double stage is about 0.65, that is more than three times the one of the single stage.

Figure 6 shows a longitudinal section of one embodiment of the gearbox according to the invention. In the example of such figure the first and second stage are inverted with respect to the example of figure 4 the first stage being made with the Double Face configuration and the second one with the Single Face configuration.

In the figure for like parts or parts having like functions the same reference numbers of figure 4 are used.

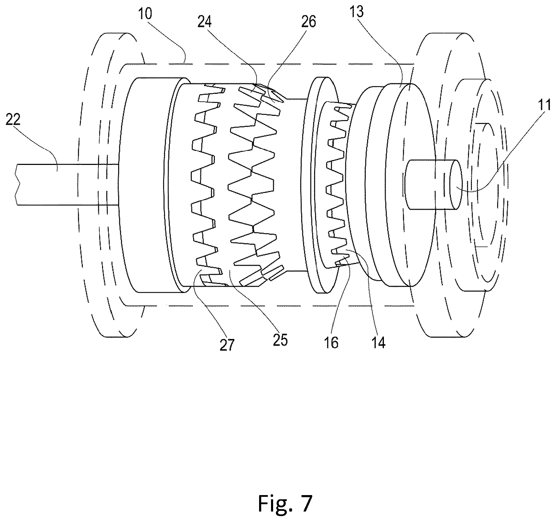

Figure 7 shows an axonometric view of one embodiment of the gearbox according to the invention, with a rendering by means of which immediately it is understood the difference between the single face and double face configuration and the case being shown as transparent.

Also in this case for the like parts or parts having like functions the same reference numbers of figure 4 are used.

## Claims

1. Planetary Gearbox comprising

   - a case (10);
   - a first shaft (11), an intermediate shaft (12) and a second shaft (22), said first, intermediate and second shafts (11), (12), (22) being supported by and rotating with respect to the case (10); said first, intermediate and second shafts (11), (12), (22) being coaxial together; the first shaft (11) and the second shaft (22) coming out of the case (10); the first shaft (11) comprising, inside the case (10), an end portion (13) inclined by a predetermined angle with respect to the axis of the first shaft (11),
   - a single face stage having a single face configuration, comprising

   a first internal bevel gear (15) and a second bevel gear (14) concentric and external to the first internal bevel gear (15), the first internal bevel gear (15) and the second bevel gear (14) being integral or made integral with each other and rotating on the end portion (13) of the first shaft (11) in an idle manner, a third fixed gear (16) mounted inside the case (10) and integral thereto, having teeth converging to the center of its pitch circle such that it is coaxial with the intermediate shaft (12), and a fourth bevel gear (17), concentric and internal to the previous bevel gear (16) and integral with the intermediate shaft (12), wherein the conical generatrices of the teeth of the first, second, third and fourth gears (14), (15), (16) and (17) have the vertex in common; said vertex coinciding with the point of intersection between the axis of the first and intermediate shafts (11) and (12) and the axis of the inclined end portion (13) of the first shaft (11),

   - a double face stage having a double face configuration, comprising

   the intermediate shaft (12) and the second shaft (22), the intermediate shaft (12) comprising, inside the case (10), an end portion (23) inclined by a predetermined angle with respect to the axis of the intermediate shaft (12), a fifth and sixth bevel gears (24) and (25) integral or made integral with each other and forming opposite sides of a disc-like structure rotating in an idle manner on the end portion (23) of the intermediate shaft (12), a seventh fixed gear (26) mounted inside the case (10) and integral thereto, the seventh fixed gear (26) having teeth converging to the center of its pitch circle such that it is coaxial with the second shaft (22), an eighth bevel gear (27), coaxial with the seventh fixed gear (26) and integral with the second shaft (22), wherein the conical generatrices of the teeth of the fifth, sixth, seventh and eighth gears (24), (25), (26) and (27) have the vertex in common; said vertex coinciding with the point of intersection between the axis of the intermediate and second shafts (12) and (22) and the axis of the inclined end portion (23) of the intermediate shaft (12), wherein the first shaft (11) is an input shaft of the single face stage of the gearbox, the intermediate shaft (12) is an output shaft of the single face stage and an input shaft of the double face stage, and the second shaft (22) is an output shaft of the double face stage and thus an output shaft of the whole gearbox, or wherein the second shaft (22) is an input shaft of the double face stage of the gearbox, the intermediate shaft (12) is an output shaft of the double face stage and an input shaft of the single face stage, and the first shaft (11) is an output shaft of the single face stage and thus an output shaft of the whole gearbox.

2. Gearbox according to claim 1, **characterized in that** the case (10) is fixed and the intermediate shaft (12) is free to rotate relatively to the case (10).

3. Gearbox according to claim 1 or 2, **characterized in that** the first and second bevel gears (14, 15) are separate pieces and are made as integral in rotation with each other by means of suitable screws, pins or fasteners.

4. Gearbox according to one or more of the preceding claims, **characterized in that** the first shaft (11) and/or the second shaft (22) and/or the intermediate shaft (12) are tubular or hollow.

5. Gearbox according to one or more of the preceding claims, **characterized in that** the inclined end portion (13) of the first shaft (11) and/or the inclined end protion (23) of the intermediate shaft (12) is removable, and separate from the straight portion, the said inclined end portions being composed of a spindle engageable in a inclined central hole of the straight part of said respective first or intermediate shaft (11, 12), or said inclined end portions being composed of a spindle provided with an inclined hole engageable on the straight part of said respective first or interemdiate shaft (11, 12) and the inclined end portion being removably fastened to said respective first or intermediate shaft (11, 12).

## Patentansprüche

1.  Planetengetriebe umfassend

    - ein Gehäuse (10);
    - eine erste Welle (11), eine mittlere Welle (12) und eine zweite Welle (22), wobei die erste, die mittlere und die zweite Welle (11), (12), (22) durch das Gehäuse (10) und relativ zu diesem drehbar gelagert sind, wobei die erste, die mittlere und die zweite Welle (11), (12), (22) koaxial zueinander sind, die erste Welle (11) und die zweite Welle (22) aus dem Gehäuse (10) austreten, wobei die erste Welle (11) innerhalb des Gehäuses (10) einen um einen vorbestimmten Winkel zur Achse der ersten Welle (11) geneigten Endabschnitt (13) aufweist,
    - eine Single Face-Stufe mit einer Single Face-Konfiguration, umfassend

    ein erstes inneres Kegelrad (15) und ein zweites Kegelrad (14), das konzentrisch außerhalb des ersten inneren Kegelrades (15) angeordnet ist, wobei das erste innere Kegelrad (15) und das zweite Kegelrad (14) einstückig oder integral miteinander geformt sind und sich auf dem Endabschnitt (13) der ersten Welle (11) im Leerlauf drehen,
    ein drittes im Gehäuse (10) montiertes und mit diesem einstückig ausgebildetes Festrad (16), das Zähnen aufweist, die zur Mitte seines Teilkreises zusammenlaufen, so dass es koaxial mit der mitteleren Welle (12) ist, und
    ein viertes Kegelrad (17), das konzentrisch und innenseitg zum vorherigen Kegelrad (16) sowie einstückig mit der mittleren Welle (12) ausgebildet ist,
    wobei die konischen Mantellinien der Zähne der ersten, zweiten, dritten und vierten Zahnräder (14), (15), (16) und (17) einen gemeinsamen Scheitelpunkt aufweisen, wobei der Scheitelpunkt mit dem Schnittpunkt zwischen der Achse der ersten und der mittleren Welle (11) und (12) und der Achse des geneigten Endabschnitts (13) der ersten Welle (11) zusammenfällt,

    - eine Double Face-Stufe mit Double Face-Konfiguration, umfassend

    die mittlere Welle (12) und die zweite Welle (22), wobei die mittlere Welle (12) innerhalb des Gehäuses (10) einen um einen vorbestimmten Winkel zur Achse der mittleren Welle (12) geneigten Endabschnitt (23) aufweist,
    ein fünftes und sechstes Kegelrad (24) und (25), die einstückig oder integral miteinander geformt sind und gegenüberliegende Seiten einer auf dem Endabschnitt (23) der mittleren Welle (12) im Leerlauf rotierenden scheibenartigen Struktur bilden,
    ein siebtes Festrad (26), das im Gehäuse (10) montiert und mit diesem einstückig ist, wobei das siebte Festrad (26) Zähne aufweist, die zur Mitte seines Teilkreises zusammenlaufen, so dass es koaxial mit der zweiten Welle (22) ist,
    ein achtes Kegelrad (27), das koaxial mit dem siebten Festrad (26) und einstückig mit der zweiten Welle (22) ausgebildet ist,
    wobei die konischen Mantellinien der Zähne der fünften, sechsten, siebten und achten Zahnräder (24), (25), (26) und (27) einen gemeinsamen Scheitelpunkt aufweisen, wobei der Scheitelpunkt mit dem Schnittpunkt zwischen der Achse der mittleren Welle und zweiten Wellen (12) und (22) und der Achse des geneigten Endabschnitts (23) der mittleren Welle (12) zusammenfällt,
    wobei die erste Welle (11) eine Eingangswelle der Single Face-Stufe des Getriebes ist, die mittlere Welle (12) eine Ausgangswelle der Single Face-Stufe und eine Eingangswelle der Double Face-Stufe ist und die zweite Welle (22) eine Ausgangswelle der Double Face-Stufe und damit eine Ausgangswelle des gesamten Getriebes ist,
    oder wobei die zweite Welle (22) eine Eingangswelle der Double Face-Stufe des Getriebes ist, die mittlere Welle (12) eine Ausgangswelle der Double Face-Stufe und eine Eingangswelle der Single Face-Stufe ist und die erste Welle (11) eine Ausgangswelle der Single face-Stufe und damit eine Ausgangswelle des gesamten Getriebes ist.

2.  Getriebe nach Anspruch 1, **dadurch gekennzeichnet, dass** das Gehäuse (10) fest ausgebildet ist und die mittlere Welle (12) relativ zu dem Gehäuse (10) frei drehbar ist.

3.  Getriebe nach Anspruch 1 oder 2, **dadurch gekennzeichnet, dass** das erste und das zweite Kegelrad (14, 15) separate Teile sind und durch geeignete Schrauben, Stifte oder Befestigungsmittel drehfest miteinander ausgebildet sind.

4.  Getriebe nach einem oder mehreren der vorhergehenden Ansprüche, **dadurch gekennzeichnet, dass** die erste Welle (11) und/oder die zweite Welle (22) und/oder die mittlere Welle (12) rohrförmig oder hohl ausgebildet sind.

5. Getriebe nach einem oder mehreren der vorhergehenden Ansprüche, **dadurch gekennzeichnet, dass** der geneigte Endabschnitt (13) der ersten Welle (11) und/oder der geneigte Endabschnitt (23) der mittleren Welle (12) entfernbar und von dem geraden Abschnitt getrennt sind, wobei die geneigten Endabschnitte aus einer Spindel bestehen, die in ein geneigtes Mittelloch des geraden Teils der jeweiligen ersten oder mittleren Welle (11, 12) in Eingriff bringbar ist, oder wobei die geneigten Endabschnitte aus einer Spindel bestehen, die mit einem geneigten Loch versehen ist, das an dem geraden Teil der jeweiligen ersten oder mittleren welle (11, 12) in Eingriff bringbar ist, und wobei der geneigte Endabschnitt entfernbar an der jeweiligen ersten oder mittleren Welle (11,12) befestigt ist.

## Revendications

1. Boîte de vitesses planétaire comprenant

> - un carter (10);
> - un premier arbre (11), un arbre intermédiaire (12) et un second arbre (22), ledit premier arbre, ledit arbre intermédiaire et ledit second arbre (11), (12), (22) étant supportés par et tournant par rapport au carter (10); ledit premier arbre, ledit arbre intermédiaire et ledit second arbre (11), (12), (22) étant coaxiaux entre eux; le premier arbre (11) et le second arbre (22) sortant du carter (10); le premier arbre (11) comprenant, à l'intérieur du carter (10), une portion d'extrémité (13) inclinée d'un angle prédéterminé par rapport à l'axe du premier arbre (11),
> - un single face stade ayant une configuration à single face, comprenant

un premier engrenage conique interne (15) et un second engrenage conique (14) concentrique et en dehors du premier engrenage conique interne (15), le premier engrenage conique interne (15) et le second engrenage conique (14) étant solidaires ou réalisés solidaires entre eux et tournant fou sur la portion d'extrémité (13) du premier arbre (11),
un troisième engrenage fixe (16) monté à l'intérieur du carter (10) et solidaire de celui-ci, ayant des dents convergeant vers le centre de son cercle primitif de sorte qu'il soit coaxial avec l'arbre intermédiaire (12), et
un quatrième engrenage conique (17) concentrique à et à l'intérieur de l'engrenage conique précédent (16) et solidaire de l'arbre intermédiaire (12),
dans laquelle les génératrices coniques des dents du premier, deuxième, troisième et quatrième engrenage (14), (15), (16) et (17) ont le sommet en commun; ledit sommet coïncidant avec le point d'intersection entre l'axe du premier arbre et de l'arbre intermédiaire (11) et (12) et l'axe de la portion d'extrémité inclinée (13) du premier arbre (11),

> - un double face stade ayant une configuration à double face, comprenant

l'arbre intermédiaire (12) et le second arbre (22), l'arbre intermédiaire (12) comprenant, à l'intérieur du carter (10), une portion d'extrémité (23) inclinée d'un angle prédéterminé par rapport à l'axe de l'arbre intermédiaire (12),
un cinquième et un sixième engrenage conique (24) et (25) solidaires ou réalisés solidaires entre eux et formant des côtés opposés d'une structure en forme de disque tournant fou sur la portion d'extrémité (23) de l'arbre intermédiaire (12),
un septième engrenage fixe (26) monté à l'intérieur du carter (10) et solidaire de celui-ci, le septième engrenage fixe (26) ayant des dents convergeant vers le centre de son cercle primitif de sorte qu'il soit coaxial avec le deuxième arbre (22),
un huitième engrenage conique (27), coaxial avec le septième engrenage fixe (26) et solidaire avec le second arbre (22),
dans laquelle les génératrices coniques des dents du cinquième, sixième, septième et huitième engrenage (24), (25), (26) et (27) ont le sommet en commun; ledit sommet coïncidant avec le point d'intersection entre l'axe de l'arbre intermédiaire et du second arbre (12) et (22) et l'axe de la portion d'extrémité inclinée (23) de l'arbre intermédiaire (12),
dans laquelle le premier arbre (11) est un arbre d'entrée du single face stade de la boîte de vitesses, l'arbre intermédiaire (12) est un arbre de sortie du single face stade et un arbre d'entrée du double face stade, et le second arbre (22) est un arbre de sortie du double face stade et donc un arbre de sortie de l'ensemble de la boîte de vitesses,
ou
dans laquelle le second arbre (22) est un arbre d'entrée du double face stade de la boîte de vitesses, l'arbre intermédiaire (12) est un arbre de sortie du double face stade et un arbre d'entrée du single face stade, et le premier arbre (11) est un arbre de sortie du single face stade et donc un arbre de sortie de l'ensemble de la boîte de vitesses.

2. Boîte de vitesses selon la revendication 1, **caractérisée en ce que** le carter (10) est fixe et l'arbre intermédiaire (12) est libre de tourner par rapport au carter (10).

3. Boîte de vitesses selon la revendication 1 ou 2, **caractérisée en ce que** le premier et le second engrenage conique (14, 15) sont des pièces séparées et sont réalisés solidaires entre eux en rotation au moyen de vis, goupilles ou attaches appropriées.

4.  Boîte de vitesses selon l'une ou plusieurs des revendications précédentes, **caractérisée en ce que** le premier arbre (11) et/ou le deuxième arbre (22) et/ou l'arbre intermédiaire (12) sont tubulaires ou creux.

5.  Boîte de vitesses selon l'une ou plusieurs des revendications précédentes, **caractérisée en ce que** la portion d'extrémité inclinée (13) du premier arbre (11) et/ou la portion d'extrémité inclinée (23) de l'arbre intermédiaire (12) est/sont amovible(s) et séparée(s) de la portion droite, lesdites portions d'extrémité inclinées étant constituées d'une broche pouvant s'engager dans un trou central incliné de la partie droite dudit premier arbre ou dudit arbre intermédiaire (11, 12) respectif, ou lesdites portions d'extrémité inclinées étant constituées d'une broche pourvue d'un trou incliné pouvant s'engager sur la partie droite dudit premier arbre ou dudit arbre intermédiaire (11, 12) respectif et la portion d'extrémité inclinée étant fixée de manière amovible audit premier arbre ou audit arbre intermédiaire (11, 12) respectif.

Fig. 1

Fig. 2

Fig. 3

Fig. 4

Fig. 5

Fig. 6

Fig. 7

**EP 2 975 296 B1**